# EUROPEAN PATENT APPLICATION

(11) **EP 1 746 450 A1**
(43) Date of publication of application: **24.01.2007**
(21) Application number: 06014040.7
(22) Date of filing: 06.07.2006
(51) Int. Cl.: G02B 21/02, G02B 15/14

(54) **Zoom microscope**

(30) Priority: 19.07.2005 JP 2005209088
(71) Applicant: Olympus Corporation, Tokyo 151-0072 (JP)
(72) Inventor: Karasawa, Masayoshi, Hachioji-shi Tokyo 193-0832 (JP)
(74) Representative: von Hellfeld, Axel

(57) **Abstract**

A zoom microscope includes a zoom optical system that has a zoom lens (20, 21) held by a lens holding member (24) shiftable along an optical axis; a zoom mechanism (30) that shifts the zoom lens along the optical axis through the lens holding member according to a zooming operation; a positional information detecting unit that detects a position of a zoom shifting unit of the zoom mechanism; and a magnification information providing unit that acquires magnification information based on the position of the zoom shifting unit and outputs the magnification information.

## Description

### TECHNICAL FIELD

The present invention relates to a zoom microscope such as a stereo microscope that can change a magnification thereof.

### BACKGROUND ART

A zoom microscope that can change a magnification thereof is widely known, and the zoom microscope is adopted for a stereo microscope, for example. The magnification of the zoom microscope is changed by shifting an optical element such as a lens along an optical axis thereof. Hence, the zoom microscope is provided with a zoom mechanism that shifts the optical element such as the lens along the optical axis thereof, and the magnification is continuously changed by a zooming operation of the zoom mechanism.

There are two types of zoom microscope: a manual type and an electric type. The manual type zoom microscope changes the magnification by manual operation, and the electric type zoom microscope changes the magnification by using a driving source such as a motor. In one example of the manual type zoom microscope that has been known already as a product, a zoom lens held by a lens frame is held by a lens frame holding member. Then, the lens frame holding member is fitted to a guide shaft, and the lens frame holding member is shiftable along the optical axis. Specifically, the lens frame holding member has a cam follower, and the lens frame holding member is shiftably engaged with a cam groove of a cam shaft that is parallel to the guide shaft. The cam shaft is connected to a zoom knob shaft through a transfer gear, and a pair of zoom knobs is secured to each end of the zoom knob shaft by a screw and the like.

The cam shaft is rotated by the transfer gear when the zoom knob is rotated, and the lens frame holding member is shifted along the guide shaft through the cam follower that is engaged with the cam groove. Therefore, the zoom lens is shifted along the optical axis, and zooming is performed. The zoom lens is continuously shifted to zoom, and the shifted quantity of the zoom lens is determined by a rotation quantity of the zoom knob.

In a conventional manual type zoom microscope, magnification values such as "0.8", "1", "1.5", and "2" are marked at several places around the outer circumference of the zoom knob. When the zoom knob is rotated, an indication line comes to overlap one of the marked magnification values. The value on which the indication line is positioned indicates the magnification of the zoom lens. Here, the rotation quantity of the zoom knob is less than or equal to 360° , and the magnification from a minimum value to a maximum value can be confirmed by the marked magnification value. Consequently, an approximate magnification of the zoom lens can be determined by viewing the marked magnification value that is pointed by the indication line.

On the other hand, JP-A No. 2004-226882 (KOKAI) discloses one example of the electric type zoom microscope. In the zoom microscope of JP-A No. 2004-226882 (KOKAI), the zoom lens is shifted by rotating the zoom knob. Consequently, the magnification thereof is changed. Here, the zoom knob is connected to a stepping motor, and the zoom knob is rotated with a predetermined velocity while having the stepping motor as the driving source thereof. A rotary encoder is connected to a motor shaft of the stepping motor, and a signal of a rotation angle is outputted to a main controller by detecting the rotation angle of the zoom knob from the rotation angle of the motor. The main controller recognizes a current magnification from the detected signal of the rotation angle of the zoom knob, and the main controller controls a driving of a focus knob.

That is to say, the zoom microscope of JP-A No. 2004-226882 (KOKAI) reads the magnification based on the rotation angle of the motor shaft by driving the zoom by the stepping motor. Consequently, a focusing can be drive controlled for a relevant magnification.

However, the electric type zoom microscope, for example, the zoom microscope in JP-A No. 2004-226882 (KOKAI), requires to be provided with a driving source such as the stepping motor, a driving power source for the driving source, and the like, which makes the electric type zoom microscope expensive. Thus, the electric type zoom microscope described above is not suitable for a simple and cheap zoom microscope.

On the other hand, the manual type zoom microscope is suitable for the simple and cheap zoom microscope since the manual type zoom microscope is not required to have the driving source, the driving power source for the driving source, and the like. However, in the manual type zoom microscope, the current magnification is determined by viewing the magnification values marked around the outer circumferential surface of the zoom knob and checking the value pointed by the indication line. Thus, the magnification value other than the marked magnification value must be estimated with reference to the marked magnification value. Hence, it is difficult to accurately read the magnification set by the manual operation in real time. Particularly, it is difficult to estimate the magnification value that lies between the marked magnification values since the magnification value changes exponentially with respect to the rotation quantity of the zoom knob.

That is to say, for the electric type zoom microscope, the magnification can be calculated as a numerical value with reference to the rotation angle of the motor shaft of the stepping motor; however, the manual type zoom microscope does not have a unit that acquires an electric signal containing the magnification information. Thus, the manual type zoom microscope only estimates the magnification value by viewing the magnification value marked on the zoom knob. Therefore, it is difficult to use the manual type zoom microscope when, for example, it is demanded to observe and photograph an object with a magnification that is the same as the magnification used previously, or when it is demanded to take the magnification used for the photograph into the image while using a digital camera and the like.

### DISCLOSURE OF INVENTION

A zoom microscope according to one aspect of the present invention includes a zoom optical system that has a zoom lens held by a lens holding member shiftable along an optical axis; a zoom mechanism that shifts the zoom lens along the optical axis through the lens holding member according to a zooming operation; a positional information detecting unit that detects a position of a zoom shifting unit of the zoom mechanism; and a magnification information providing unit that acquires magnification information based on the position of the zoom shifting unit and outputs the magnification information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a side view showing an example of a schematic configuration of a zoom microscope of a first embodiment of the present invention;
FIG. 2 is a perspective view of a zoom microscope main body when one portion thereof is removed;
FIG. 3 is a perspective view showing an example of a schematic configuration of a magnification display adaptor;
FIG. 4 is a schematic block diagram including an example of a configuration of an electric system of the magnification display adaptor;
FIG. 5 is a perspective view showing a zoom microscope main body of a second embodiment of the present invention when one portion thereof is removed;
FIG. 6 is a perspective view showing an example of a schematic configuration of a magnification display adaptor of the second embodiment of the present invention;
FIG. 7 is a perspective view showing a zoom microscope main body of a third embodiment of the present invention when the zoom microscope main body is viewed from above and from the front thereof; and
FIG. 8 is a perspective view showing a zoom microscope main body of a fourth embodiment of the present invention when one portion thereof is removed.

### BEST MODE(S) FOR CARRYING OUT THE INVENTION

Embodiments of a zoom microscope according to the present invention will be described in detail below with reference to the accompanying drawings.

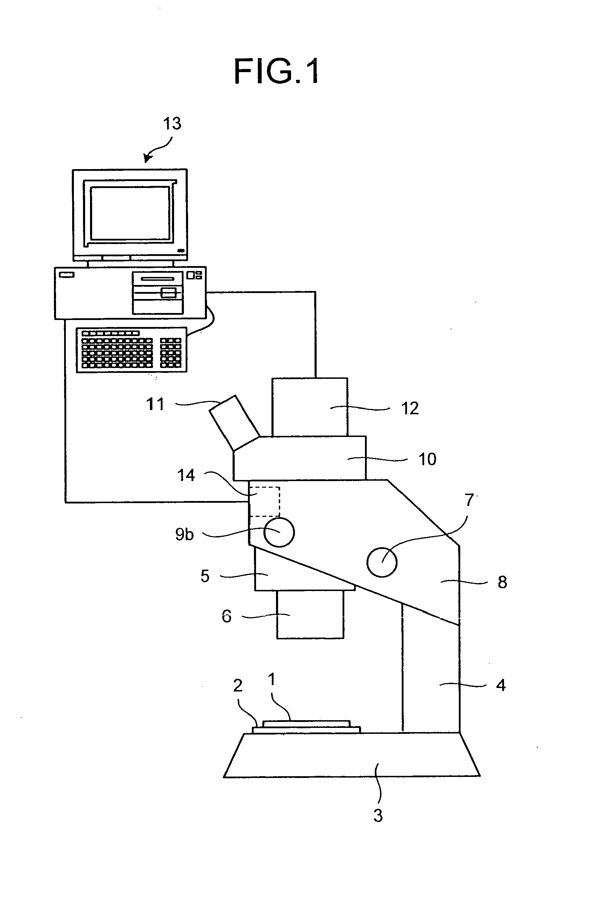

FIG. 1 is a side view showing an example of a schematic configuration of a zoom microscope of a first embodiment of the present invention. The first embodiment shows the zoom microscope applied to a stereo microscope, by way of example.

In the zoom microscope of the first embodiment, a sample 1 is placed on a stage 2, which is supported by a base 3. An objective lens 6 of a zoom microscope main body 5 is supported by an arm 4 so as to be positioned over the base 3 and to oppose to the stage 2. The arm 4 is provided with a focusing mechanism 8 including a focusing knob 7. The focusing knob 7 shifts the zoom microscope main body 5 upward and downward along an observation optical path and brings the zoom microscope into focus. The zoom microscope main body 5 has a zoom optical system including a zoom lens that changes magnification and that will be described later. A pair of zoom knobs 9a and 9b for shifting the zoom lens along the observation optical path by a manual operation is attached to the focusing mechanism 8.

A lens barrel, denoted by reference character 10, is arranged at an upper part of the zoom microscope main body 5. An eyepiece 11 is attached to the lens barrel 10 and extends obliquely upward from the front side of the lens barrel 10. A digital camera 12 for imaging and recording the image viewed by the zoom optical system is attached to the lens barrel 10. The digital camera 12 is connected to a control computer 13 through a signal cable. The digital camera 12 and the control computer 13 together form an imaging and recording unit. Further, a magnification display adaptor, denoted by reference character 14, is attachable to one part of the zoom microscope main body 5. The magnification display adaptor 14 is an option unit for the zoom microscope, and the magnification display adaptor 14 is connected to the control computer 13 through a signal cable.

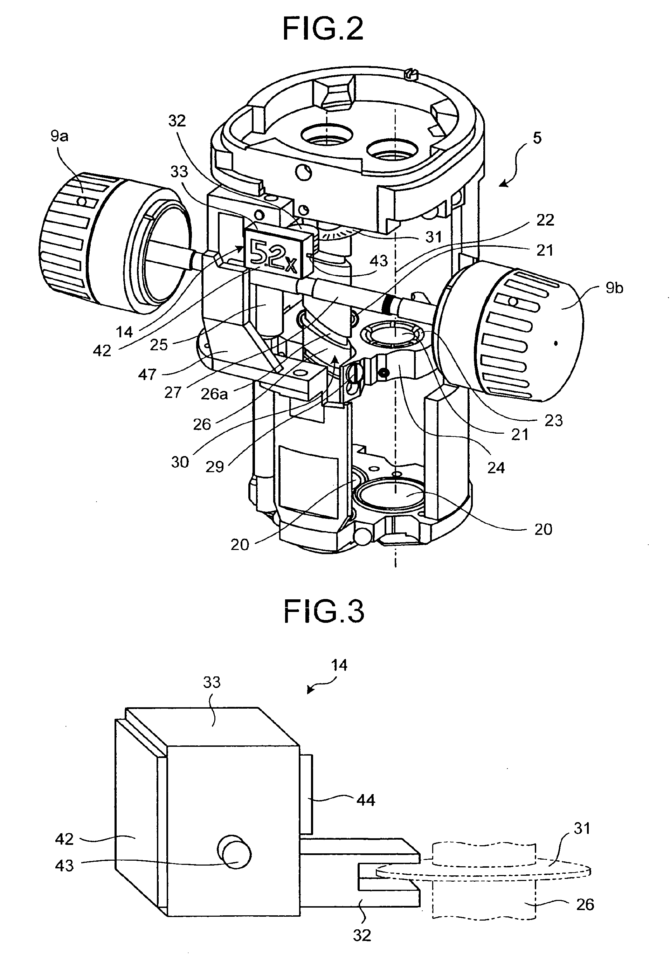

Next, an example of a configuration of the zoom microscope main body 5 is explained. FIG. 2 is a perspective view of the zoom microscope main body 5 when one portion thereof is removed. The zoom microscope main body 5 is formed in a cylindrical shape. The zoom microscope main body 5 has plural optical elements, which have an optical power, on an optical axis 22. That is to say, zoom lenses 20 and 21 represent the optical elements, and the zoom lenses 20 and 21 constitute the zoom optical system. There are two observation optical paths in the present embodiment, and the zoom lenses 20 and 21 are provided on the observation optical paths respectively.

The zoom lens 21 is held by a lens holding member 24 through a lens frame 23. The lens holding member 24 is slidably fitted to a guide shaft 25 arranged in parallel with an optical axis, and the lens holding member 24 is shiftable along the guide shaft 25 in a direction of the optical axis 22. Further, the zoom microscope main body 5 is provided with a cam shaft 26 and a zoom knob shaft 27 therein. The cam shaft 26 is disposed in parallel with the guide shaft 25 as well as rotatably supported, and the zoom knob shaft 27 is disposed in perpendicular to the cam shaft 26 and extends in the horizontal direction. The zoom microscope main body 5 is further provided with a power transfer unit for transferring rotation of the zoom knob shaft 27 to the cam shaft 26. The power transfer unit includes a transfer gear that connects the zoom knob shaft 27 to the cam shaft 26. Zoom knobs 9a and 9b are secured at respective ends of the zoom knob shaft 27 by a screw and the like. The lens holding member 24 is provided with a cam follower 29 that engages with a cam groove 26a formed spirally on an outer circumferential face of the cam shaft 26. Consequently, the lens holding member 24 shifts only upward and downward without any rotation by engaging the cam groove 26a with the cam follower 29 when the cam shaft 26 is rotated.

When the zoom knobs 9a and 9b are rotated, rotation of the zoom knob shaft 27 is transferred to rotation of the cam shaft 26 through the transfer gear. Then, the lens holding member 24 shifts upward and downward along the optical axis 22 when the rotation of the cam shaft 26 is transferred to a linear motion of the lens holding member 24 along the optical axis 22 through the cam follower 29 that is engaged with the cam groove 26a. The upward and downward shift of the lens holding member 24 causes the zoom lens 21 to shift upward and downward, so that the magnification is continuously changed. A zoom mechanism 30 includes the lens holding member 24, the cam shaft 26, the zoom knob shaft 27, the zoom knobs 9a and 9b, and the cam follower 29 described hereinbefore.

The cam shaft 26 represents a zoom shifting part in the first embodiment, and an encoder board 31, which is a rotating body rotating with the cam shaft 26, is attached to the cam shaft 26 at an appropriate position. For example, the encoder board 31 is attached to an upper portion of the cam shaft 26. A cam shaft encoder 32, which is a positional information detecting unit that directly detects a rotation angle of the cam shaft 26 by optically detecting the rotation angle of the encoder board 31, is disposed to the encoder board 31. The cam shaft encoder 32 is provided as a part of a unit main body 33 of the magnification display adaptor 14 that is detachably attached to the zoom microscope main body 5 by a screw (not shown). The cam shaft encoder 32 is arranged at a position with respect to the encoder board 31 so that the cam shaft encoder 32 can appropriately detect the rotation angle when the unit main body 33 of the magnification display adaptor 14 is attached to a predetermined position of the zoom microscope main body 5.

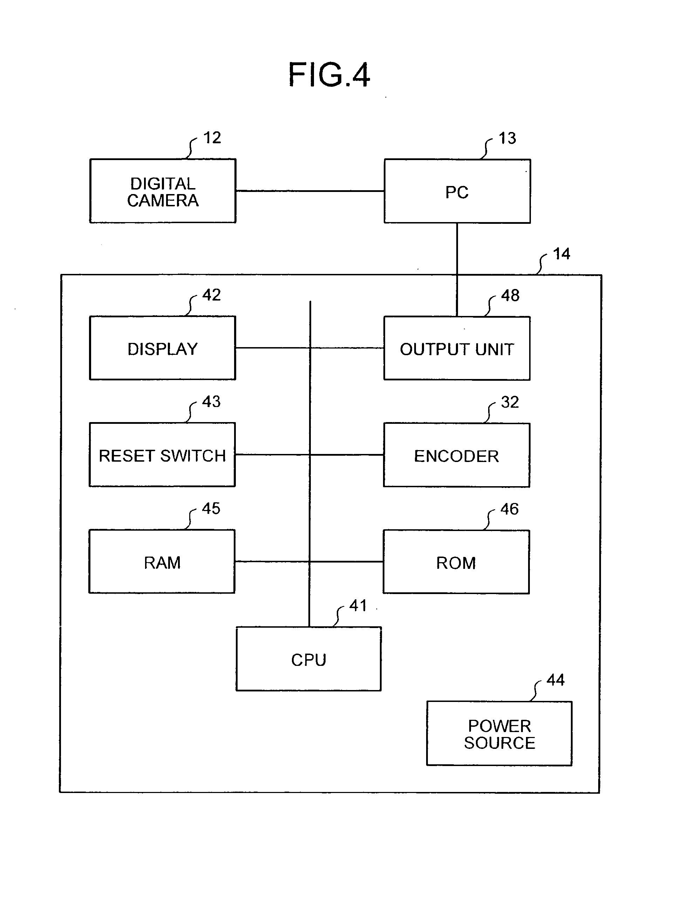

FIG. 3 is a perspective view showing an example of a schematic configuration of the magnification display adaptor 14, and FIG. 4 is a schematic block diagram including an example of a configuration of an electric system of the magnification display adaptor 14. As shown in FIGS. 3 and 4, the unit main body 33 of the magnification display adaptor 14 of the first embodiment is provided with a CPU (Central Processing Unit) 41 that functions as a conversion unit and the like. Here, the conversion unit and the like calculates a magnification value as a magnification information by a predetermined conversion equation based on the information of the shifted position, which is the rotation angle of the cam shaft 26 detected by the cam shaft encoder 32. Further, the unit main body 33 is provided with a display 42 such as a LCD (Liquid Crystal Display) that displays the calculated magnification value as shown by "5.2x" in FIG. 2. The magnification display adaptor 14 is provided with a reset switch 43 that resets the magnification value displayed with a maximum and minimum magnification. Further, the magnification display adaptor 14 is provided with a power source 44, which is a battery system that supplies current to each part of the magnification display adaptor 14. Here, the current is used for the calculation of the magnification and for the detection of the rotation angle. In the first embodiment, the CPU 41 and the display 42 constitute the magnification information providing unit.

The CPU 41 constitutes the microcomputer together with a RAM (Random Access Memory) 45 and a ROM (Read Only Memory) 46. The CPU 41 executes a calculation process to obtain the magnification value according to the predetermined conversion equation, which shows a relationship between the rotation angle of the cam shaft 26 corresponding to the zooming operation and the shifted position of the zoom lens 21. Alternatively, instead of having the conversion equation, the CPU 41 can store a conversion table in which the rotation angle of the cam shaft 26 and the magnification value are associated with each other in advance in the ROM 46 and the like. Then, the CPU 41 can execute a process for converting the rotation angle to the magnification value with reference to the conversion table.

Since the zoom lens 21 shifts upward and downward along the optical axis 22 by rotating the zoom knobs 9a and 9b, the magnification is changed. When the zoom knobs 9a and 9b are rotated, the cam shaft 26 is also rotated. Then, the rotation angle of the cam shaft 26 is photoelectrically converted by the cam shaft encoder 32 provided with respect to the encoder board 31 attached on the cam shaft 26, and the converted rotation angle of the cam shaft 26 is read. The detected and read rotation angle of the cam shaft encoder 32 is converted to the magnification value by the CPU 41, and the magnification value is displayed to the display 42 as a numerical value.

Before the magnification is displayed, the value of the displayed magnification is matched with an actual value of the magnification of the zoom lens 21. Specifically, the zoom knobs 9a and 9b are rotated first until the zoom lens 21 stops at the maximum magnification. Then, when the reset switch 43 is pressed, the numerical value of the rotation angle of the cam shaft 26 in the equation for converting the rotation angle to the magnification value is reset to "0", as well as the displayed magnification value when the numeric value is reset to "0" becomes the maximum magnification. Then, the detection of the rotation angle of the cam shaft 26 corresponding to the zooming operation and the process for converting the rotation angle to the magnification value are performed by having the position of the zoom lens 21 at the maximum magnification described hereinbefore as a basis. Here, the position to be reset is not limited to the position with the maximum magnification, and may be the position with the minimum magnification or a position predetermined for each zoom microscope. Consequently, the reset to determine an origin to be detected of the cam shaft 26 can be appropriately performed even if the zoom microscope has a structure that allows the magnification display adaptor 14 to be attached. Thus, a correct magnification can always be displayed.

As described above, the zoom microscope of the first embodiment is the manual type. When the encoder board 31 is attached on the cam shaft 26, the user can remove a cover 47 and attach the magnification display adapter 14 to the zoom microscope main body 5 according to his/her preference. Then, while manually operating the zoom knobs 9a and 9b to continuously change the magnification, the user can accurately confirm the magnification in real time. Particularly, the sample can be easily observed with a magnification value that is the same as the magnification value of the previous observation since the numeric value is displayed on the display 42 as the magnification value. Here, the zoom microscope is the manual type so that the zoom microscope does not have the driving system and the power source for the driving. However, the magnification display adaptor 14 is provided with the power source 44 so that the magnification display adaptor 14 can sufficiently function when the magnification display adaptor 14 is subsequently attached. Further, the zoom microscope can be maintained to be inexpensive since the electric power supplied from the power source is required only for the detection and the calculation. It is possible to preliminarily assemble the cam shaft encoder 41 and the display 42 inside the zoom microscope main body 5, unlike the zoom microscope described hereinbefore in which the magnification display adaptor 14 including the cam shaft encoder 41 and the display 42 is configured as the option unit. Here, the positional information detecting unit includes the encoder board 31 and the cam shaft encoder 32.

Further, in the zoom microscope of the first embodiment, the magnification value to be acquired has a high accuracy. This is because the zoom lens 21 determines the magnification, and the rotation angle of the cam shaft 26 that is close to the zoom lens 21 is detected in order to indirectly detect the shifted position of the zoom lens 21. In addition, the rotation angle of the cam shaft 26 is directly detected through the encoder board 31 attached on the cam shaft 26 so that number of parts can be minimized compared with a mechanism which includes gears or the like. Further, a backlash is not caused whereby accuracy improves.

As shown in FIG. 1 and the like, the digital camera 12 is arranged in the zoom microscope of the first embodiment so that an observation image can be imaged by a CCD (Charge Coupled Device) and the like and recorded under the control of the control computer 13. The control computer 13 stores the image captured by the digital camera 12 in a memory and the like as, for example, JPEG (Joint Photographic Experts Group) image data. Here, associated information related to an imaging condition such as imaging date and time and imaging velocity are taken into the image information as an Exif (Exchangeable Image File Format) file and the associated information is recorded.

In the present embodiment, the information of the magnification value acquired as described hereinbefore can be taken into the image as the Exif file by outputting the information to the control computer 13 while imaging by the digital camera 12. Hence, the CPU 41 of the present embodiment has a function of linearly converting the calculated magnification value to a voltage value in such a way that the magnifications from the minimum to the maximum are converted to the voltage values from 0 V to 1 V. Then, the voltage signal corresponding to the magnification value is outputted from the output unit 48 to the control computer 13 through the signal cable. The control computer 13 reconverts the inputted voltage value to the magnification value, and writes and records the magnification value into the image information taken by the digital camera 12, as a part of the Exif file.

Consequently, the magnification at when the image is captured is automatically recorded in the image captured by the digital camera 12 so that the user who is capturing the image is not required to separately record a condition relating to the magnification in the image capturing condition. Further, a suitable observation and a suitable imaging condition can be automatically set in association with the magnification value. Such an automatic processing can be realized by feeding back the output magnification value to a focusing device of the digital camera 12 and to an illumination light intensity control device. Further, the image can be observed and captured with the magnification value that is the same as the magnification value at the previous observation and at the imaging by referring to the recorded information of the magnification value displayed on the screen and the like of the control computer 13. Particularly, when a desired magnification value is selected through the control computer 13, it is possible to make an announcement through voice and the like when the magnification, which is changed by the manual operation of the zoom knobs 9a and 9b, reaches a desired magnification value.

In the first embodiment, the result calculated by the CPU 41 is output to the control computer 13; however, the CPU 41 and the like may not be required. Thus, number of pulses detected by the cam shaft encoder 32 can be directly outputted to the control computer 13 as the information of the shifted position. The computer 13 may convert the number of pulses to the magnification value. Further, it is possible to replace the function of the control computer 13 by a function of the digital camera 12. Here, the magnification display adaptor 14 and the digital camera 12 are connected through the signal cable.

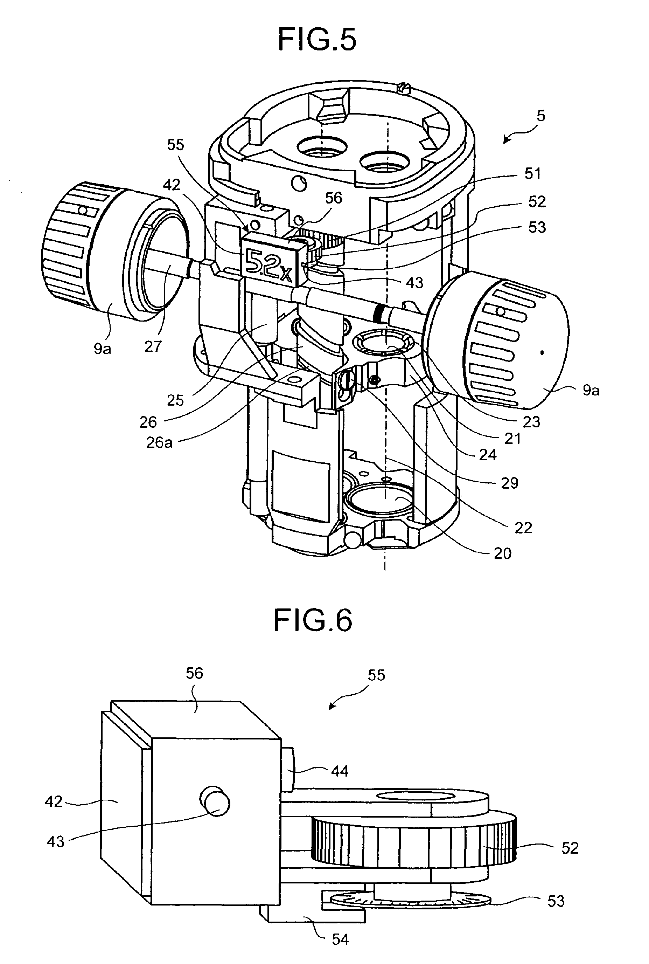

FIG. 5 is a perspective view showing a zoom microscope main body of a second embodiment of the present invention when one portion thereof is removed, and FIG. 6 is a perspective view showing an example of a schematic configuration of a magnification display adaptor of the second embodiment of the present invention. In FIGS. 5 and 6, the same elements as shown in FIGS. 1 to 4 are represented by the same reference characters, and explanations thereof are not to be repeated hereinafter (also in the following embodiments).

In the zoom microscope of the second embodiment, the cam shaft 26 is used as the zoom shifting part. A cam gear 51, which is the rotating body, is attached on the cam shaft 26, and the cam gear 51 rotates together with the cam shaft 26. A magnification display adaptor 55 is provided with a rotation gear 52 that rotates by engaging with the cam gear 51, an encoder board 53 that is provided coaxially with the rotation gear 52, a rotation gear encoder 54 that indirectly detects the rotation angle of the cam shaft 26 by optically detecting the rotation angle of the encoder board 53. The magnification display adaptor 55 is detachably attached to the zoom microscope main body 5 through the screw and the like. When a main body 56 of the magnification display adaptor 55 is attached to a predetermined position of the zoom microscope main body 5, the cam gear 51 engages with the rotation gear 52. The positional information detecting unit includes the rotation gear 52, the encoder board 53, and the rotation gear encoder 54.

As similar to the configuration of the zoom microscope of the first embodiment, the magnification display adaptor 55 of the second embodiment is provided with the CPU 41, the display 42, the reset switch 43, the power source 44, and the like, and the magnification display adaptor 55 is connected to the control computer 13.

In the configuration described hereinbefore, the zoom lens 21 shifts along the optical axis 22 when the zoom knobs 9a and 9b are rotated, and the magnification is changed. Here, the rotation gear 52 is rotated through the cam gear 51. The rotation angle of the rotation gear 52 is detected and read by the rotation gear encoder 54 through the encoder board 53. The information of the shifted position, which is the detected and the read rotation angle of the rotation gear 52, is converted into the magnification value by an equation such as (magnification value) = 6.3 × exp(-0.004 × rotation angle of rotation gear) at the CPU 41. As similar to the first embodiment, the rotation angle can be converted to the magnification value with reference to the conversion table. The converted magnification value is displayed as the numeric value on the display 42. Other functions and configurations in the present embodiment are same as those in the first embodiment.

As similar to the first embodiment, the zoom microscope of the second embodiment is the manual type. When the cam gear 51 is attached on the cam shaft 26, the user can remove the cover 47 and attach the magnification display adaptor 55 to the zoom microscope main body 5. Then, the user can accurately confirm the magnification in real time while manually operating the zoom knobs 9a and 9b to continuously change the magnification. Particularly, it is possible to use one part of the transfer gear as the cam gear 51, and the magnification display adaptor 55 can be subsequently attached to an existing product. Further, the rotation gear 52, the encoder board 53, the rotation gear encoder 54, and the display 42 can be preliminarily built inside the zoom microscope main body 5 rather than configuring the magnification display adaptor 55 as the option unit. Here, the positional information detecting unit is configured by the cam gear 51, the rotation gear 52, the encoder board 53, and the rotation gear encoder 54.

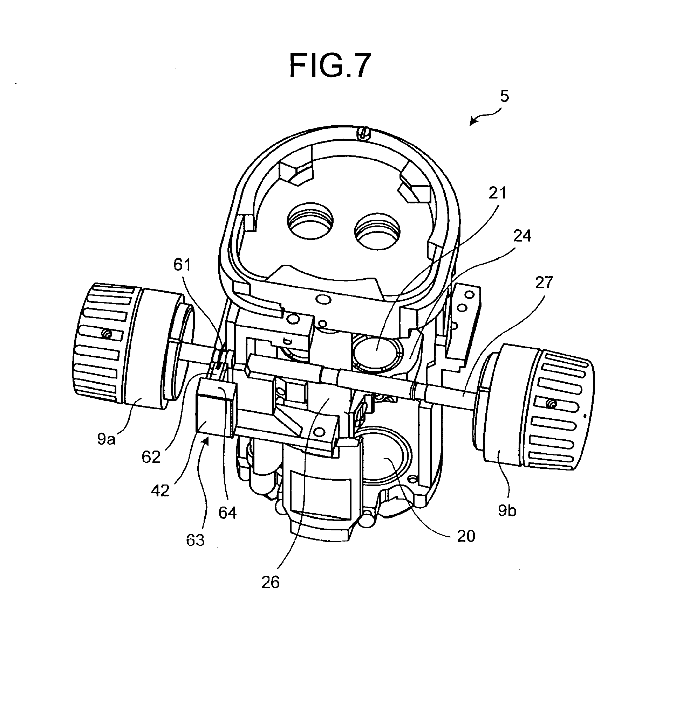

FIG. 7 is a perspective view showing a zoom microscope main body of a third embodiment of the present invention when the zoom microscope main body is viewed from above and from the front thereof. In the zoom microscope of the third embodiment, the zoom knob shaft 27 is used as the zoom shifting part, and an encoder board 61, which is the rotating body rotating together with the zoom knob shaft 27, is attached on the zoom knob shaft 27. Further, a knob shaft encoder 62 is disposed with respect to the encoder board 61. The knob shaft encoder 62 is the positional information detecting unit that indirectly detects the rotation angle of the cam shaft 26 by optically detecting the rotation angle of the encoder board 61. The knob shaft encoder 62 is provided as a part of a main body 64 of a magnification display adaptor 63 that is detachably attached to the zoom microscope main body 5 by the screw and the like (not shown). The knob shaft encoder 62 is set with respect to the encoder board 61 so that the rotation angle can be detected when the main body 64 of the magnification display adaptor 63 is attached to the zoom microscope main body 5 at a predetermined position.

As similar to the first embodiment, the zoom microscope of the third embodiment has a configuration in which the magnification display adaptor 63 is provided with the CPU 41, the display 42, the reset switch 43, the power source 44, and the like, and a configuration in which the magnification display adaptor 63 is connected to the control computer 13.

In the configuration described hereinbefore, the zoom lens 21 shifts along the optical axis 22 and the magnification is changed corresponding to the rotation of the zoom knobs 9a and 9b. Here, the zoom knob shaft 27 rotates due to the rotation of the zoom knobs 9a and 9b so that the encoder board 61 is also rotated. Hence, the rotation angle of the encoder board 61 is detected and read by the knob shaft encoder 62 as the rotation angle of the zoom knob shaft 27. The information of the shifted position, which is the detected and the read rotation angle of the zoom knob shaft 27, is converted to the magnification value by the predetermined equation at the CPU 41. Here, the information of the shifted position can be converted to the magnification value with reference to the conversion table. Then, the converted magnification value is displayed on the display 42 as the numeric value. Other configurations and functions of the present embodiment are the same as those in the first and the second embodiment.

As similar to the first and the second embodiments, the zoom microscope of the third embodiment is the manual type. When the user attaches the magnification display adopter 63 to the zoom microscope main body 5 according to his/her preference, the user can accurately confirm the magnification in real time while manually operating the zoom knobs 9a and 9b to continuously change the magnification. Particularly, since the zoom shifting unit to be detected is the zoom knob shaft 27, which is exposed to the outside, the encoder board 61 can be attached to the zoom knob shaft 27 by detaching the zoom knobs 9a and 9b from the zoom knob shaft 27. Thus, the magnification display unit 63 including the encoder board 61 can be easily attached to the zoom microscope as the option unit.

A configuration described hereinafter can replace the encoder board 61. That is to say, as similar to the configuration in FIGS. 5 and 6, a knob gear can be attached on the zoom knob shaft 27 as the rotating body. Then, the rotation gear that rotates by engaging with the knob gear, the encoder board that is provided coaxially with the rotation gear, and the rotation gear encoder that detects the rotation angle of the rotation gear through the encoder board can be provided in the zoom microscope main body 5.

Furthermore, the zoom knob 9a or the zoom knob 9b can be the zoom shifting unit instead of the zoom knob shaft 27 so that the rotation angle of the zoom knobs 9a or 9b can directly be detected. For example, a grating is formed on the outer circumferential face of the zoom knobs 9a or 9b. Then, the rotation angle can directly be detected by optically detecting the grating.

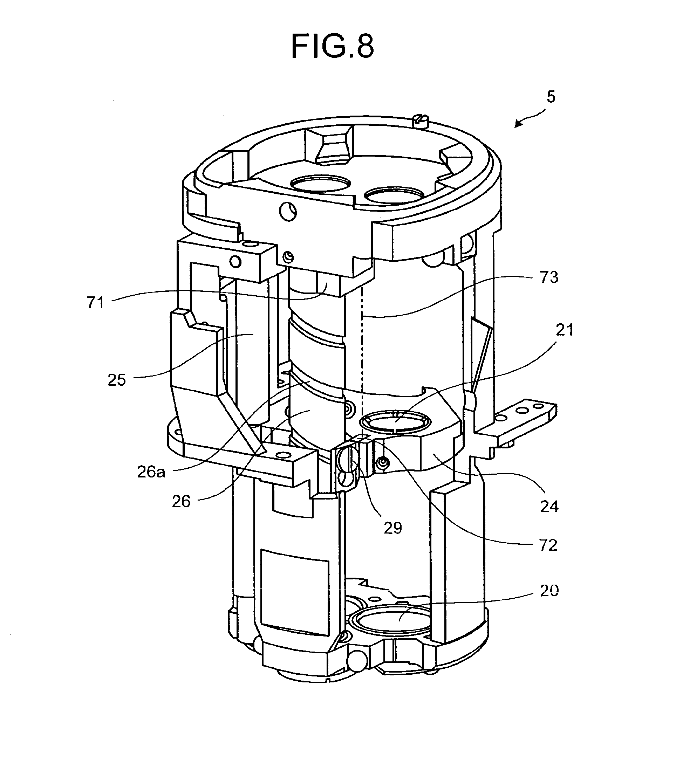

FIG. 8 is a perspective view showing a zoom microscope main body of a fourth embodiment of the present invention when one portion thereof is removed. In the zoom microscope of the forth embodiment, the lens holding member 24 is used as the zoom shifting unit. A laser distance measuring device 71, which is a distance measuring unit that detects the shifted position of the lens holding member 24 along the optical axis 22, is provided at an end part of the optical axis 22. The laser distance measuring device 71 emits a laser beam 73 to a mirror 72 attached on one part of the lens holding member 24, and the laser distance measuring device 71 accurately detects the distance between the laser distance measuring device 71 and the mirror 72 by detecting the laser beam 73 reflected by the mirror 72. That is to say, the laser distance measuring device 71 accurately detects the position of the lens holding member 24 along the optical axis 22. Even though not particularly shown in the drawings, the zoom microscope of the present embodiment is provided with a conversion unit such as the CPU that converts the information of the shifted position to the magnification value and a display that presents the converted magnification value. Here, the information of the shifted position is a result of the distance measurement by the laser distance measuring device 71.

In the configuration described above, the zoom lens 21 is shifted along the optical axis 22 due to the rotation operation of the zoom knobs 9a and 9b, and the magnification is changed. Here, the lens holding member 24 is shifted along the optical axis 22, and the shifted position of the lens holding member 24 is detected by the laser distance measuring device 71. The detected information of the shifted position of the lens holding member 24 is converted to the magnification value by the predetermined equation at the CPU. Here, the information of the shifted position can be converted into the magnification value with reference to the conversion table. Then, the converted magnification value is displayed at the display as the numeric value.

As similar to the first, the second, and the third embodiments, the zoom microscope of the fourth embodiment is the manual type. When the user manually operates the zoom knobs 9a and 9b to continuously change the magnification of the zoom microscope of the fourth embodiment, the user can accurately confirm the magnification in real time. Particularly, the magnification can accurately be detected since the magnification is determined by the shifted position of the lens holding member 24 that holds the zoom lens 21. Here, the position of the zoom lens determines the actual magnification. Therefore, the accurate magnification value is obtained.

It is not limited to use the laser distance measuring device 71 as the distance measuring unit for detecting the position of the lens holding member 24. For example, a linear encoder board can be disposed over a shifting region of the zoom lens 21 inside the zoom microscope main body 5, and the position of the lens holding member 24 can be detected by an encoder installed on the lens holding member 24.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

For example, even though the configuration in which the zoom knobs 9a and 9b are manually operated is explained in the embodiments, the accurate magnification can be displayed for the electric type zoom microscope that does not have the display. The accurate magnification can be displayed for the electric type zoom microscope by providing the encoder board and the cam gear on the cam shaft and the motor shaft, and by attaching the magnification display adaptor of the present invention subsequently.

## Claims

1. A zoom microscope comprising:
a zoom optical system that has a zoom lens (20, 21) held by a lens holding member (24) shiftable along an optical axis;
a zoom mechanism (30) that shifts the zoom lens along the optical axis through the lens holding member according to a zooming operation;
a positional information detecting unit that detects a position of a zoom shifting unit of the zoom mechanism; and
a magnification information providing unit that acquires magnification information based on the position of the zoom shifting unit and outputs the magnification information.

2. The zoom microscope according to claim 1, further comprising a unit (14; 55; 63) that includes the positional information detecting unit; and a power source (44).

3. The zoom microscope according to claim 1 or 2, wherein
the zooming operation is a manual operation of a zoom knob (9a, 9b).

4. The zoom microscope according to claim 3, wherein
the zoom mechanism includes
a cam shaft (26) that converts a rotation of a zoom knob shaft (27) due to the manual operation of the zoom knob (9a, 9b) into a shifting along the optical axis,
a power transfer mechanism that transfers a power by engaging the zoom knob shaft (27) with the cam shaft (26), and
a cam follower (29) that engages the cam shaft (26) with the lens holding member (24), and
the positional information detecting unit directly or indirectly detects a rotation angle of the cam shaft (26) through a rotating body attached on the cam shaft (26) while having the cam shaft (26) as the zoom shifting unit.

5. The zoom microscope according to claim 4, wherein
the positional information detecting unit includes
an encoder board (31) that is attached on the cam shaft (26) as the rotating body, and
a cam shaft encoder (32) that detects the rotation angle of the cam shaft (26) through the encoder board (31).

6. The zoom microscope according to claim 4, wherein
the positional information detecting unit includes
a cam gear (51) that is attached on the cam shaft (26) as the rotating body,
a rotation gear (52) that rotates in engagement with the cam gear (51),
an encoder board (53) that is provided coaxially with the rotation gear (52), and
a rotation gear encoder (.54) that detects a rotation angle of the rotation gear (52) through the encoder board (53).

7. The zoom microscope according to claim 3, wherein
the zoom mechanism includes
a cam shaft (26) that converts a rotation of a zoom knob shaft (27) due to the manual operation of the zoom knob (9a, 9b) into a shifting along the optical axis,
a power transfer mechanism that transfers a power by engaging the zoom knob shaft (27) with the cam shaft (26), and
a cam follower (29) that engages the cam shaft with the lens holding member (24), and
the positional information detecting unit directly or indirectly detects a rotation angle of the zoom knob shaft (27) through a rotating body attached on the zoom knob shaft (27) while having the zoom knob shaft (27) as the zoom shifting unit.

8. The zoom microscope according to claim 7, wherein
the positional information detecting unit includes
an encoder board (61) that is attached on the zoom knob shaft (27) as the rotating body, and
a knob shaft encoder (62) that detects the rotation angle of the zoom knob shaft (27) through the encoder board (61).

9. The zoom microscope according to claim 7, wherein
the positional information detecting unit includes
a knob gear that is attached on the zoom knob shaft (27) as the rotating body,
a rotation gear that rotates in engagement with the knob gear,
an encoder board that is provided coaxially with the rotation gear, and
a rotation gear encoder that detects the rotation angle of the rotation gear through the encoder board.

10. The zoom microscope according to claim 3, wherein
the zoom mechanism includes
a cam shaft (26) that converts a rotation of a zoom knob shaft (27) due to the manual operation of the zoom knob (9a, 9b) to a shifting along the optical axis,
a power transfer mechanism that transfers a power by engaging the zoom knob (9a, 9b) shaft with the cam shaft (26), and
a cam follower (29) that engages the cam shaft (26) with the lens holding member (24), and
the positional information detecting unit detects a rotation angle of the zoom knob (9a, 9b) while having the zoom knob (9a, 9b) as the zoom shifting unit.

11. The zoom microscope according to claim 3, wherein
the zoom mechanism includes
a cam shaft (26) that converts a rotation of a zoom knob shaft due to the manual operation of the zoom knob (9a, 9b) into a shifting along the optical axis,
a power transfer mechanism that transfers a power by engaging the zoom knob (9a, 9b) shaft with the cam shaft (26), and
a cam follower (29) that engages the cam shaft (26) and the lens holding member (24), and
the positional information detecting unit is a distance measuring unit that measures a position of the lens holding member (24) along the optical axis while having the lens holding member (24) as the zoom shifting unit.

12. The zoom microscope according to claim 11, wherein
the distance measuring unit is a laser distance measuring device (71).

13. The zoom microscope according to any one of claims 3 to 12, wherein
the positional information detecting unit includes a reset unit for determining an origin of the position to be detected.

14. The zoom microscope according to any one of claims 3 to 13, wherein
the magnification information providing unit includes a conversion unit that converts information of the position of the zoom shifting unit into a magnification value.

15. The zoom microscope according to claim 14, wherein
the conversion unit converts the information of the position into the magnification value by a predetermined equation.

16. The zoom microscope according to claim 14, wherein
the conversion unit converts the information of the position into the magnification value by referring to a conversion table in which the position of the zoom shifting unit and a magnification value are associated with, each other in advance.

17. The zoom microscope according to any one of claims 14 to 16, wherein
the magnification information providing unit includes a display unit (42) that displays the converted magnification value.

18. The zoom microscope according to any one of claims 14 to 17, wherein
the magnification information providing unit includes an output unit (48) that outputs the converted magnification value to an outside.

19. The zoom microscope according to claim 18, further comprising
an imaging and recording unit that captures an image observed by the zoom optical system and records the image, wherein
the output unit (48) outputs the magnification value to the imaging and recording unit as imaging condition information that is associated with the image information.

20. The zoom microscope according to claim 18 or 19, wherein
the output unit (48) converts the magnification value into a voltage value and outputs the voltage value.
